# EUROPÄISCHE PATENTSCHRIFT

(11) **EP 2 306 115 B1**
(45) Veröffentlichungstag und Bekanntmachung des Hinweises auf die Patenterteilung: **15.11.2017**
(21) Anmeldenummer: 10010667.3
(22) Anmeldetag: 25.09.2010
(51) Int. Cl.: F24J 2/08, F24J 2/24, F24J 2/26, F24J 2/40, F24J 2/48, F24J 2/50

(54) **Solarkollektor**
Solar collector
Collecteur solaire

(30) Priorität: 05.10.2009 DE 102009048219; 11.01.2010 AT 132010
(43) Veröffentlichungstag der Anmeldung: 06.04.2011
(73) Patentinhaber: Vaillant GmbH, 42859 Remscheid (DE)
(72) Erfinder: Salg, Frank, 42897 Remscheid (DE); Spahn, Hans Josef, 40699 Erkrath (DE)
(74) Vertreter: Hocker, Thomas

(56) Entgegenhaltungen:
- EP-A1- 1 008 820
- WO-A1-00/20805
- WO-A2-2009/059785
- DE-A1- 10 011 052
- DE-A1- 19 726 330
- DE-A1-102007 047 693
- DE-A1-102008 011 219
- DE-B3- 10 304 536
- DE-B3- 10 306 189
- DE-U1- 9 412 438
- DE-U1-202008 003 699
- US-A- 4 227 511

## Beschreibung

In Solarkollektoren wird Sonnenergie aufgenommen und direkt oder indirekt auf einen Heiz- oder einen Solekreislauf übertragen.

Soll von einer großen Solarkollektoreintrittsfläche Wärme auf eine Fluidleitung übertragen werden, so erfolgt dies gemäß dem Stand der Technik mittels Parabolspiegeln hinter der Leitung, wobei sich die Leitungen im Brennpunkt der Parabolspiegel befinden, oder mittels Linsen vor der Leitung, wobei sich die Leitungen im Brennpunkt der Linsen befinden. Linsen vor der Leitung müssen zur Bündelung konkav geformt sein und verfügen dementsprechend über eine entsprechende Bauhöhe.

WO 00/20805 und DE 9412438 U1 offenbaren den Einsatz von Fresnel-Linsen, um Solarstrahlung zu einem Absorber zu fokussieren. US 4227511 offenbart einen Absorber mit mehreren parallel angeordneten Absorbern, wobei jedem der Absorber eine eigene Fresnel-Linse zugeordnet ist.

Ziel der Erfindung ist eine Bündelung der solaren Strahlung zur Realisierung hoher Wärmestromdichten bei gleichzeitig kompakter Bauweise.

Erfindungsgemäß wird dies mittels der Merkmale des unabhängigen Anspruchs 1 realisiert. Hierdurch lässt sich eine hohe Leistungsdichte der Kollektoren bei relativ geringer Bauhöhe erreichen. Die Bündelung ermöglicht in Verbindung mit thermisch höher belastbaren Fluiden (z.B. Thermoölen) Hochtemperaturanwendung im Bereich über 100°C insbesondere für den Einsatz in Saisonal-/ Langzeitspeichersystemen.
Durch den besonders intensiven Energieeintrag kann es jedoch zur Stagnation im Kollektor kommen, wenn die Abnahme der Wärme nicht gewährleistet ist.
Ein weiterer Teil der Erfindung befasst sich daher mit dem Einsatz von elektrochromen oder gasochromen Beschichtungen beziehungsweise Nutzung des thermotropen Effektes. Ziel ist die Verminderung/ Verhinderung von Stagnationseffekten im Kollektor durch Veränderung der Sonnenlicht-Transmission.
Bei elektrochromen Materialien ändert sich der Lichtdurchlass je nach angelegter Gleichspannung. Das Glas beinhaltet derartige elektrochrome Materialien und verändert seine Farbe, wenn elektrische Ladungen an eine mikroskopisch dünne Beschichtung (zum Beispiel Wolframoxid, Polyanilin) auf der Glasoberfläche abgegeben werden. Schwachstrom aktiviert eine ca 1 µm dicke elektrochrome Schicht, welche die Farbe ändert. Bei Kurzschluss oder Änderung der Polarität der Spannung wird das Glas wieder farblos. Das Glas benötigt nur während der Einfärbungsphase oder beim Herstellen vollständiger Transparenz Strom. Ist keine Spannung angelegt, so behält das Glas die gegenwärtige Farbe, bis erneut Strom zugeführt wird. Durch Variation der Spannung kann dabei der Transmissionsgrad verändert werden.

Analog hierzu kann ein thermotroper Effekt genutzt werden. Hier findet eine temperaturabhängige Konfigurationsänderungen von Polymeren in Gemischen mit Wasser (Hydrogel) oder eingebettet in Kunststoffmatrix (Polymerblend) statt. Auch der Einsatz polymerer Flüssigkristalle ist möglich. Punktuelle Brechungsindexsprünge (Streuzentren) entstehen durch "Verklumpungseffekte", wodurch bei steigender Temperatur die Schicht opak wird.

Ein gasochromer Effekt wird durch Gasbeladung bewirkt, wobei die Verfärbungen infolge des reversiblen Einbaus von Protonen in Oxide der Übergangsmetalle (insbes. WO3, etc.) entstehen. Die Protonen werden mittels Katalysator direkt aus Wasserstoff entnommen.

In einem gasochromen System kommt es durch eine katalytische Reaktion mit einer Gasmischung im Zwischenraum zweier Scheiben zu einer Farbveränderung. Die Scheiben sind mit einer Beschichtung aus Wolframoxid und einer Deckschicht aus Platin versehen. Durch die Schichtdicke und die steuerbare Gaskonzentration lassen sich beinahe beliebige Transmissionsgrade einstellen. Die Umschaltung erfolgt nicht bei bestimmten Temperaturen, sondern durch Anlegen eines Stromes. Dieser führt zu einer Veränderung der Moleküle und zu einer Verdunkelung.

Sowohl beim elektrochromen, als auch thermotropen und gasochromen Effekt wird Energie in der Schicht bei Erhöhung des Absorptionsgrades aufgenommen, wodurch diese sich aufheizt und langwellige Infrarotstrahlung sendet.

Zur Lösung dieses Problems kann beim elektrochromen und gasochromen Effekt auch eine Reflexion bewirkt werden. Hierbei findet eine reversible Hydridbildung an speziellen Metallen und Legierungen (Seltenerd u.ä.) statt.

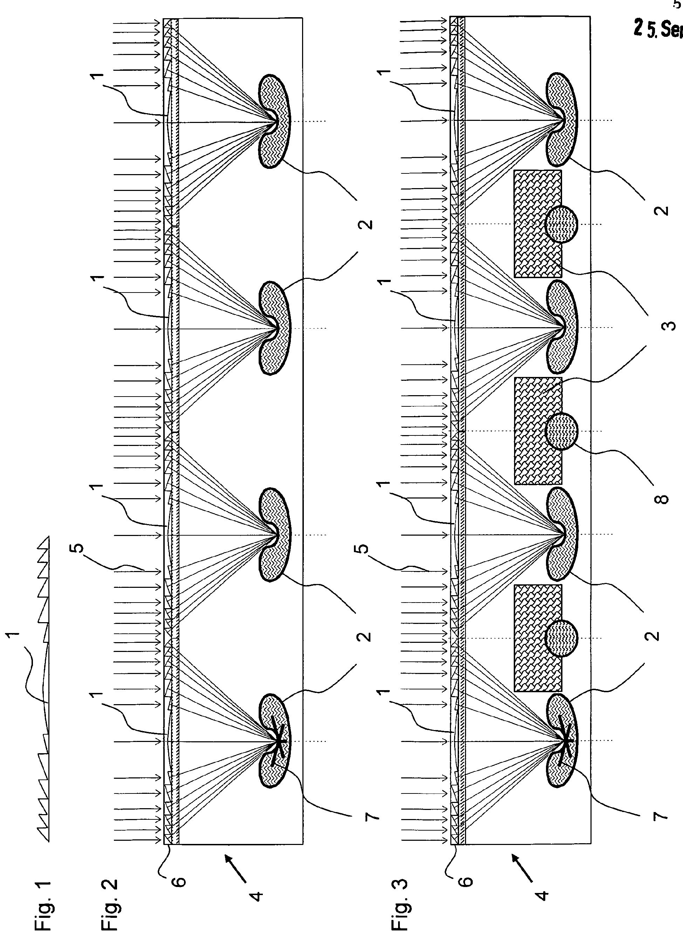

Die Erfindung wird anhand der Figuren detailliert dargestellt; hierbei zeigen:
Figur 1 eine Fresnelsche Stufenlinse (Fresnel-Linse),
Figur 2 einen Solarkollektor mit Fresnel-Linsen gemäß dem Stand der Technik,
Figur 3 einen erfindungsgemäßen Solarkollektor mit Fresnel-Linsen und Metallschaum-Absorbern

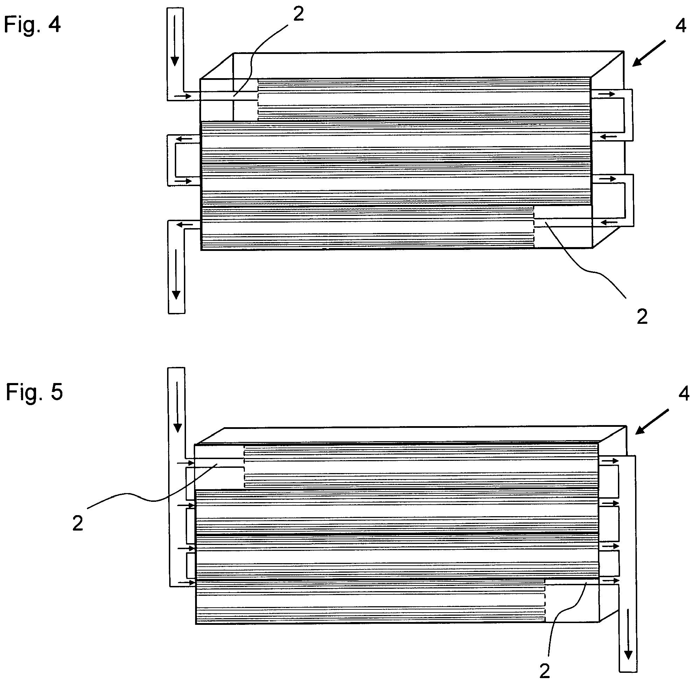

Figur 4 bis 7 diverse Schaltungsvarianten und
Figur 8 einen Solarkollektor mit Fresnel-Linsen mit elektrochromer Beschichtung.
Eine Fresnel-Linse 1, wie in Figur 1 dargestellt, hat gegenüber einer konventionellen Linse ein verringertes Volumen durch eine Aufteilung in ringförmige Bereiche. Diese zeichnet sich dadurch aus, dass im zentralen Bereich eine konkave Linse mit relativ geringem Winkel angeordnet ist. Nach außen schließen sich konkave Zonen mit steilerem Winkel an, wobei der Winkel nach außen hin zunimmt. Von außen nach innen wird in jedem Bereiche die Dicke verringert, sodass die Linse eine Reihe ringförmiger Stufen erhält. Alle Ringe besitzen dabei die gleiche Brennweite. Eine Fresnel-Linse baut somit deutlich flacher als eine konventionelle Linse gleicher Brennweite.
Neben ringförmigen Fresnel-Linsen 1 gibt es auch Fresnel-Linsen 1, welche sich horizontal konstant wie ein Strangpressprofil erstrecken. Derartige Linsen finden bei Solar-Kollektoren mit länglichen Absorbern Verwendung.
Figur 2 zeigt einen Solar-Flachkollektor 4 mit hydro- oder stranggussgeformtem Rinnenabsorbern 2 aus wärmebeständigem Material mit guten Wärmeleiteigenschaften (Kupfer, Aluminium) sowie einer Kollektorscheibe 6 mit Fresnel-Linsen 1. Die Rinnenabsorber 2 sind derart geformt, dass Reflexionen im Rinnenabsorber gehalten werden können. Die dargestellten Rinnenabsorber 2 werden seriell durchströmt. Wärmeleitkonturen 7 innerhalb des Fluids in den Rinnenabsorbern 2 erhöhen den Wärmeübergang. Die solare Strahlung 5 wird somit zum Rinnenabsorbern 2 gebündelt. Befinden sich die Fresnel-Linsen 1 unterhalb oder innerhalb der Kollektorscheibe 6, so ist die Oberfläche der Fresnel-Linsen 1 vor Verschmutzungen insbesondere an den unstetigen Stellen geschützt, während die glatte Oberfläche der Kollektorscheibe 6 nicht so leicht verschmutzt und zudem leichter gesäubert werden kann.

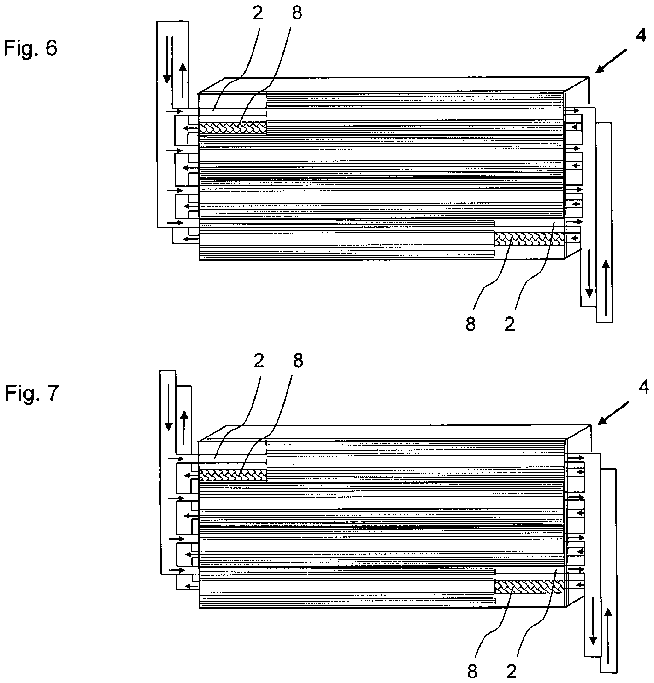

Figur 3 zeigt einen erfindungsgemäßen Solar-Flachkollektor 4 mit erfindungsgemäßen Metallschaumabsorbern 3 zur Restlichtnutzung im noch zur Verfügung stehenden Bauraum. Strahlung 5, die nicht auf die Rinnenabsorber 2 fällt, wird dort aufgenommen und die so eingefangene Wärme auf die Leitungen 8, welche die Metallschaumabsorber 3 passieren, geleitet. Die Rinnenabsorber 2 und die Leitungen 8 werden alternierend seriell durchströmt. Es können auch alle Rinnenabsorber 2 und Leitungen 8 parallel geschaltet sein (Parallelschaltung nach Tichelmann). Alternativ können die Leitungen 8 zunächst alle in Reihe geschaltet sein und der Vorerwärmung dienen, ehe das zu erhitzende Fluid durch alle zusammen in Reihe geschalteten Rinnenabsorber geleitet wird. Eine weitere Alternative stellt die jeweilige Parallelschaltungen aller Leitungen 8, als auch aller Rinnenabsorber 2 dar, wobei die parallelen Leitungen 8 in Serie zu den parallelen Rinnenabsorbern 2 geschaltet sind (vgl. Figur 6). Eine weitere Alternative sieht eine völlige Entkopplung der Rinnenabsorber 2 von den Leitungen 8 und Nutzung für unterschiedliche Zwecke vor (vgl. Figur 7).

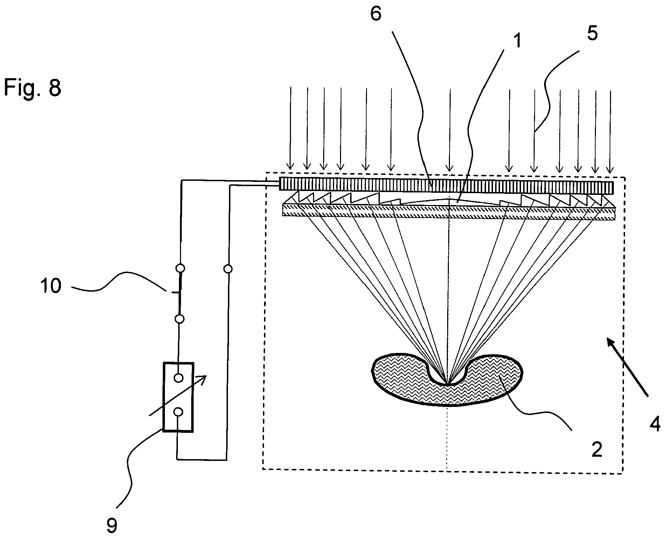

Bei einem Solarabsorber 4 gemäß Figur 8 befindet sich eine entsprechende elektrochrome Beschichtung auf der Kollektorscheibe 6 am Kollektoreintritt. Die elektrochrome Beschichtung ist über einen Umschalter 10 mit einer regelbaren Spannungsquelle 9 verbunden. Zwischen der Kollektorscheibe 6 und einem Rinnenabsorber 2 ist eine Fresnel-Linse 1 angeordnet.

Droht Stagnation im Kollektor 4, so steigt zuvor die Temperatur im Fluid im Kollektor 4 an. Mittels eines nicht dargestellten Temperatursensors kann dies erfasst und das Signal an eine nicht dargestellte Regelung weitergegeben werden. Wird ein vorgegebener Schwellwert überschritten, so legt die Regelung an die elektrochrome Beschichtung eine entsprechende Spannung an, so dass die Durchlässigkeit der Kollektorscheibe 6 abnimmt. Die Reduktion der Durchlässigkeit kann optional selektiv erfolgen, so dass quasikontinuierlich die Durchlässigkeit reduziert wird. Zum Halten der Trübung wird der Umschalter 10 derartig geschaltet, dass die elektrochrome Beschichtung stromlos ist. Sinkt die Temperatur im Kollektor 4 wieder, so wird der Transmissionsgrad wieder entsprechend angepasst. Zum Aufheben der Trübung wird der Umschalter 10 derartig geschaltet, dass die elektrochrome Beschichtung kurzgeschlossen wird. Hierdurch lässt sich in Verbindung mit der Wärmeabnahme am Kollektor 4 die Temperatur im Kollektor 4 einstellen.

Bei einer thermotropen Beschichtung anstelle einer elektrochromen Beschichtung werden Fluidleitungen durch die entsprechend gestaltete Scheibe geführt. Überschreitet die Fluidtemperatur die entsprechende Temperatur, so trübt sich die Kollektorscheibe 6.

## Patentansprüche

1. Solarkollektor (4) mit mehreren parallel angeordneten Absorbern (2) und einer Kollektorscheibe (6), welches den Solarkollektor (4) auf der Eintrittseite der solaren Strahlung (5) abschließt, wobei auf, in oder unter der Kollektorscheibe (6) Fresnel-Linsen (1), vorzugsweise als Folien-Beschichtung, angebracht sind, wobei die Absorber (2) sich in den Brennpunkten der Fresnel-Linsen (1) befinden, **dadurch gekennzeichnet, dass** zwischen den Absorbern (2) in Metallschaumabsorbern (3) angeordnete, fluiddurchströmte Leitungen (8) angeordnet sind.

2. Solarkollektor (4) nach Anspruch 1, **dadurch gekennzeichnet, dass** die Absorber (2) hydro- oder stranggussgeformte Rinnenabsorber (2) sind.

3. Solarkollektor (4) nach einem der Ansprüche 1 oder 2, **dadurch gekennzeichnet, dass** an der Kollektorscheibe (6) elektrochrome oder gasochrome Beschichtungen beziehungsweise andere Beschichtungen, welche den thermotropen Effekt nutzen, angebracht sind.

## Claims

1. Solar collector (4) having a plurality of absorbers (2) arranged parallel, and a collector lens (6) which closes the solar collector (4) on the side of the entry of the solar radiation (5), Fresnel lenses (1) being applied, preferably as a film coating, in or below the collector lens (6), the absorbers (2) being located at the focal points of the Fresnel lenses (1), **characterised in that** lines (8), which are arranged in metal foam absorbers (3) and through which fluid flows, are arranged between the absorbers (2).

2. Solar collector (4) according to Claim 1, **characterised in that** the absorbers (2) are trough absorbers (2) formed by hydro or continuous casting.

3. Solar collector (4) according to either one of Claims 1 and 2, **characterised in that** electrochromic or gasochromic coatings, or other coatings which use the thermotropic effect, are applied on the collector lens (6).

## Revendications

1. Capteur solaire (4) comportant plusieurs absorbeurs (2) agencés parallèlement et un disque collecteur (6), qui isole le capteur solaire (4) sur le côté d'entrée du rayonnement solaire (5), dans lequel des lentilles de Fresnel (1), de préférence sous la forme d'un revêtement de feuilles, sont montées sur, dans ou sous le disque collecteur (6), dans lequel les absorbeurs (2) se trouvent aux foyers des lentilles de Fresnel (1), **caractérisé en ce que** des conduits (8) parcourus par un fluide et agencés dans des absorbeurs de mousse métallique (3) sont agencés entre les absorbeurs (2).

2. Capteur solaire (4) selon la revendication 1, **caractérisé en ce que** les absorbeurs (2) sont des absorbeurs à rigoles (2) conformés pour être refroidis par jets d'eau ou par coulée continue.

3. Capteur solaire (4) selon l'une quelconque des revendications 1 ou 2, **caractérisé en ce que** des revêtements électrochromes ou gazochromes, éventuellement d'autres revêtements, qui mettent en oeuvre l'effet thermotrope, sont appliqués sur le disque collecteur (6).
